# EUROPÄISCHE PATENTANMELDUNG

(11) **EP 2 842 787 A2**
(43) Veröffentlichungstag der Anmeldung: **04.03.2015**
(21) Anmeldenummer: 14179277.0
(22) Anmeldetag: 31.07.2014
(51) Int. Cl.: B60K 35/00

(54) **Verfahren und Vorrichtung zum Steuern einer Wiedergabeeinheit eines Fahrzeugs**

(30) Priorität: 26.08.2013 DE 102013216897
(71) Anmelder: ROBERT BOSCH GMBH, 70442 Stuttgart (DE)
(72) Erfinder: Schiek, Ulrich, 30519 Hannover (DE); Ibele, Philipp, 89250 Senden (DE)

(57) **Zusammenfassung**

Die Erfindung betrifft ein Verfahren zum Steuern einer Wiedergabeeinheit (110) eines Fahrzeugs (100). Hierbei ist die Wiedergabeeinheit (110) ausgebildet, um zumindest einem ersten Benutzer (125) der Wiedergabeeinheit (110) eine Nachricht wiederzugeben. Zunächst erfolgt ein Schritt des Einlesens einer Benutzerinformation (160) bezüglich eines Vorhandenseins des zumindest einen ersten Benutzers (125) in dem Fahrzeug (100). Anschließend erfolgt ein Schritt des Empfangens einer vertraulichen Nachricht (155) über eine Schnittstelle (150) zu einem zumindest einem zweiten Benutzer (130) zugeordneten Informationsgerät (115). Dabei repräsentiert die vertrauliche Nachricht (155) eine nicht zur Wiedergabe für den zumindest einen ersten Benutzer (125) vorgesehene Nachricht. Schließlich erfolgt ein Schritt des Verarbeitens der vertraulichen Nachricht (155), um eine Wiedergabe der vertraulichen Nachricht (155) auf der Wiedergabeeinheit (110) zu unterdrücken, wenn im Schritt des Empfangens die vertrauliche Nachricht (155) empfangen wird und die im Schritt des Einlesens eingelesene Benutzerinformation (160) das Vorhandensein des zumindest einen ersten Benutzers (125) repräsentiert.

## Beschreibung

### Stand der Technik

Die vorliegende Erfindung bezieht sich auf ein Verfahren zum Steuern einer Wiedergabeeinheit eines Fahrzeugs, eine entsprechende Vorrichtung und ein entsprechendes Computerprogrammprodukt.

Ein mobiles Endgerät wie beispielsweise ein Smartphone oder ein Tablet-PC kann ein Display aufweisen, auf dem Informationen in Form von Pop-ups angezeigt werden können. Pop-ups sind Benachrichtigungsfenster, die ohne Interaktion eines Nutzers des mobilen Endgeräts auf dem Display erscheinen und dabei andere Informationen überdecken. Bei solchen Pop-ups kann es sich beispielsweise um Mitteilungen über Softwareaktualisierungen, um Nachrichten von Social-Media-Apps wie WhatsApp, Twitter oder Facebook, um E-Mails, SMS-Nachrichten, Erinnerungen von Kalender-Apps oder um Meldungen über einen eingehenden Telefonanruf handeln.

Ferner kann ein Fahrzeug ein lokales Multimediasystem zum Wiedergeben von Informationen über Displays oder Lautsprecher aufweisen. Das Multimediasystem kann als multiples Anzeigesystem mit mehreren Anzeigeeinheiten wie beispielsweise einem Center-Stack-Display (Display in Mittelkonsole integriert), einem Clusterdisplay (Display in Kombiinstrument integriert) oder einem Head-up-Display (Display in Blickrichtung eines Fahrers) oder einer als Brille getragenem Display realisiert sein. Das Multimediasystem kann ausgebildet sein, um über eine Schnittstelle mit dem mobilen Endgerät verbunden zu werden. Dadurch können die auf dem mobilen Endgerät angezeigten Pop-ups zusätzlich im Fahrzeug angezeigt werden.

Zudem können im Innenraum des Fahrzeugs Kameras oder ein Sitzerkennungssystem zum Erkennen von Fahrzeuginsassen verbaut sein.

Die DE 10 2010 060 936 beschreibt eine herkömmliche Wiedergabeeinheit eines Fahrzeugs.

### Offenbarung der Erfindung

Vor diesem Hintergrund werden mit der vorliegenden Erfindung ein verbessertes Verfahren und eine verbesserte Vorrichtung zum Steuern einer Wiedergabeeinheit eines Fahrzeugs sowie ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Es wird ein Verfahren zum Steuern einer Wiedergabeeinheit eines Fahrzeugs vorgestellt, wobei die Wiedergabeeinheit ausgebildet ist, um zumindest einem ersten Benutzer der Wiedergabeeinheit eine Nachricht wiederzugeben, wobei das Verfahren folgende Schritte umfasst:
Einlesen einer Benutzerinformation bezüglich eines Vorhandenseins des zumindest einen ersten Benutzers in dem Fahrzeug;
Empfangen einer vertraulichen Nachricht über eine Schnittstelle zu einem zumindest einem zweiten Benutzer zugeordneten Informationsgerät, wobei die vertrauliche Nachricht eine nicht zur Wiedergabe für den zumindest einen ersten Benutzer vorgesehene Nachricht repräsentiert; und
Verarbeiten der vertraulichen Nachricht, um eine Wiedergabe der vertraulichen Nachricht auf der Wiedergabeeinheit zu unterdrücken, wenn im Schritt des Empfangens die vertrauliche Nachricht empfangen wird und die im Schritt des Einlesens eingelesene Benutzerinformation das Vorhandensein des zumindest einen ersten Benutzers repräsentiert.

Bei einer Wiedergabeeinheit kann es sich beispielsweise um ein Display oder einen Lautsprecher zum Wiedergeben der Nachricht in dem Fahrzeug handeln. Die Wiedergabeeinheit kann beispielsweise in Form eines in eine Mittelkonsole des Fahrzeugs integrierten Displays ausgeführt sein und so angeordnet sein, dass sie von einem Fahrer und/oder Beifahrer des Fahrzeugs eingesehen werden kann. Unter zumindest einem ersten Benutzer der Wiedergabeeinheit kann beispielsweise der Beifahrer oder eine Beifahrergruppe in dem Fahrzeug verstanden werden. Der zumindest eine erste Benutzer kann die über die Wiedergabeeinheit wiedergegebene Nachricht einsehen oder anhören. Beispielsweise kann der zumindest eine erste Benutzer das in die Mittelkonsole integrierte Display betrachten, um die Nachricht zu lesen. Bei der Nachricht kann es sich beispielsweise um eine SMS, eine E-Mail, eine Erinnerung, eine Chatnachricht, einen eingehenden Telefonanruf oder eine sonstige schriftliche und/oder akustische Mitteilung an einen Benutzer der Wiedergabeeinheit handeln.

Zum Steuern der Wiedergabeeinheit kann eine Benutzerinformation bezüglich eines Vorhandenseins des zumindest einen ersten Benutzers in dem Fahrzeug eingelesen werden. Unter einer Benutzerinformation kann beispielsweise ein Signal eines in dem Fahrzeug verbauten Sensors verstanden werden. Der Sensor kann ausgebildet sein, um ansprechend auf das Vorhandensein des zumindest einen ersten Benutzers das Signal auszugeben.

Die Wiedergabeeinheit kann ausgebildet sein, um eine vertrauliche Nachricht wiederzugeben, die über eine Schnittstelle zu einem zumindest einem zweiten Benutzer zugeordneten Informationsgerät empfangen wurde. Unter einer vertraulichen Nachricht kann eine Nachricht verstanden werden, deren Inhalt der zumindest eine erste Benutzer nicht erfahren soll. Beispielsweise kann das Informationsgerät eine Anwendung aufweisen, die ausgebildet ist, um die Nachricht beim Empfang der Nachricht auf dem Informationsgerät als vertraulich zu markieren. Die Anwendung kann beispielsweise durch den zumindest einen zweiten Benutzer konfigurierbar sein. Die Wiedergabeeinheit kann mit einer Vorrichtung zum Steuern der Wiedergabeeinheit verbunden sein. Die Vorrichtung kann die Schnittstelle zu dem Informationsgerät aufweisen, um die vertrauliche Nachricht zu empfangen. Beispielsweise kann die Vorrichtung über eine Funkverbindung wie Bluetooth oder Wifi oder eine kabelgebundene Verbindung mit dem Informationsgerät verbunden sein. Bei dem zumindest einen zweiten Benutzer der Wiedergabeeinheit kann es sich um einen Besitzer des Informationsgeräts, beispielsweise den Fahrer des Fahrzeugs, handeln. Unter einem Informationsgerät kann beispielsweise ein Smartphone, ein Tablet-PC oder ein in dem Fahrzeug verbautes Empfangsgerät verstanden werden. Das Informationsgerät kann ausgebildet sein, um die Nachricht beispielsweise über eine Internet- oder Telefonverbindung zu empfangen und an die Schnittstelle weiterzuleiten.

Die vertrauliche Nachricht kann so verarbeitet werden, dass eine Wiedergabe der vertraulichen Nachricht auf der Wiedergabeeinheit unterdrückt wird, wenn die vertrauliche Nachricht empfangen wird und die Benutzerinformation das Vorhandensein des zumindest einen ersten Benutzers in dem Fahrzeug repräsentiert. Beispielsweise kann die Vorrichtung zum Steuern der Wiedergabeeinheit die Benutzerinformation einlesen. Ferner kann die Vorrichtung ausgebildet sein, um ansprechend auf das Empfangen der Benutzerinformation das Bereitstellen eines Wiedergabesignals zum Wiedergeben der vertraulichen Nachricht auf der Wiedergabeeinheit zu verhindern.

Ein Informationsgerät kann mit einer Wiedergabeeinheit eines Fahrzeugs verbunden werden. Dadurch kann eine Nachricht, die über das Informationsgerät empfangen wird, im Fahrzeug angezeigt werden. Befindet sich neben einem privilegierten Benutzer des Informationsgeräts wie beispielsweise einem Fahrer des Fahrzeugs noch eine weitere Person im Fahrzeug, so wird die Nachricht beim Empfang der Nachricht unter Umständen auch der weiteren Person angezeigt. Um die Vertraulichkeit der Nachricht zu wahren, ist es vorteilhaft, wenn eine Wiedergabe der Nachricht auf der Wiedergabeeinheit des Fahrzeugs in Abhängigkeit von einem Vorhandensein der weiteren Person im Fahrzeug gesteuert werden kann.

Der hier vorgestellte Ansatz basiert auf der Erkenntnis, dass bestimmte Nachrichten nicht für jeden Nutzer einer Wiedergabeeinheit zur Kenntnis genommen können werden sollen, je nachdem wie ein Benutzer, dem das Informationsgerät zugeordnet ist, eine Privatsphäreneinstellung für unterschiedliche Nachrichten gesetzt hat. Wenn nun der Benutzer die vertrauliche Nachricht (d. h. die Nachricht, die nur privilegierte Nutzer erfahren sollen) auf einer Wiedergabeeinheit ausgegeben haben möchte, kann dies zur Verletzung der Privatsphäre führen. Um dies zu vermeiden, kann vor einer Ausgabe der vertraulichen Nachricht eine Verknüpfung mit einem Signal erfolgen, welches eine Anwesenheit eines weiteren Benutzers signalisiert, welcher die vertrauliche Nachricht nicht erfahren soll. In diesem Fall wird dann die Ausgabe der Nachricht unterdrückt.

Der hier vorgestellte Ansatz bietet den Vorteil, dass nun mit technisch sehr einfachen und sehr verbreiteten und somit kostengünstig zur Verfügung stehenden Hilfsmitteln eine deutliche Verbesserung des Schutzes der Privatsphäre ermöglicht werden kann.

Gemäß einer Ausführungsform des vorliegenden Ansatzes kann im Schritt des Empfangens eine öffentliche Nachricht empfangen werden. Hierbei kann die öffentliche Nachricht eine zur Wiedergabe für den zumindest einen ersten Benutzer vorgesehene Nachricht repräsentieren. Dabei kann ferner in einem Schritt des Wiedergebens die öffentliche Nachricht auf der Wiedergabeeinheit wiedergegeben werden, wenn im Schritt des Empfangens die öffentliche Nachricht empfangen wird. Bei einer öffentlichen Nachricht kann es sich beispielsweise um eine Nachricht handeln, deren Inhalt der zumindest eine erste Benutzer erfahren darf. Vorteilhafterweise kann die öffentliche Nachricht auf der Wiedergabeeinheit wiedergegeben werden, um den zumindest einen ersten Benutzer von der öffentlichen Nachricht in Kenntnis zu setzen.

Gemäß einer weiteren Ausführungsform des vorliegenden Ansatzes kann im Schritt des Verarbeitens die vertrauliche Nachricht verarbeitet werden, um die vertrauliche Nachricht auf der Wiedergabeeinheit wiederzugeben, wenn im Schritt des Empfangens die vertrauliche Nachricht empfangen wird und die im Schritt des Einlesens eingelesene Benutzerinformation ein Nichtvorhandensein des zumindest einen ersten Benutzers repräsentiert. Dies hat den Vorteil, dass die vertrauliche Nachricht auf der Wiedergabeeinheit wiedergegeben werden kann, insbesondere wenn der zumindest eine zweite Benutzer allein im Fahrzeug ist. Sofern es sich bei dem zumindest einen zweiten Benutzer um den Fahrer des Fahrzeugs handelt, kann der zumindest eine zweite Benutzer die vertrauliche Nachricht vernehmen, ohne von einer von ihm zu bewältigenden Fahraufgabe abgelenkt zu werden.

Gemäß einer weiteren Ausführungsform des vorliegenden Ansatzes kann im Schritt des Einlesens ferner eine Benutzerinformation bezüglich eines Vorhandenseins zumindest eines dritten Benutzers eingelesen werden. Hierbei kann im Schritt des Verarbeitens die vertrauliche Nachricht verarbeitet werden, um die vertrauliche Nachricht auf der Wiedergabeeinheit wiederzugeben, wenn im Schritt des Empfangens die vertrauliche Nachricht empfangen wird und die im Schritt des Einlesens eingelesene Benutzerinformation das Vorhandensein des zumindest einen dritten Benutzers repräsentiert. Unter zumindest einem dritten Benutzer kann im Allgemeinen ein Benutzer der Wiedergabeeinheit verstanden werden, der wie der zumindest eine zweite Benutzer befugt ist, die vertrauliche Nachricht entgegenzunehmen. Dabei kann es sich beispielsweise um ein Familienmitglied des zumindest einen zweiten Benutzers oder eine sonstige dem zumindest einen zweiten Benutzer vertraute Person handeln. Mithilfe der Benutzerinformation bezüglich des Vorhandenseins des zumindest einen dritten Benutzers kann zwischen dem zumindest einen ersten und dem zumindest einen dritten Benutzer unterschieden werden, wenn der zumindest eine zweite Benutzer nicht allein im Fahrzeug ist. Dadurch kann die Wiedergabeeinheit besonders genau gesteuert werden.

Gemäß einer weiteren Ausführungsform des vorliegenden Ansatzes kann das Verfahren einen Schritt des Ausgebens der vertraulichen Nachricht auf zumindest einer weiteren Wiedergabeeinheit des Fahrzeugs umfassen, wenn im Schritt des Empfangens die vertrauliche Nachricht empfangen wird und die im Schritt des Einlesens eingelesene Benutzerinformation das Vorhandensein des zumindest einen ersten Benutzers repräsentiert. Dabei kann die zumindest eine weitere Wiedergabeeinheit ausgebildet sein, um dem zumindest einen zweiten Benutzer die vertrauliche Nachricht und alternativ oder zusätzlich die öffentliche Nachricht wiederzugeben. Bei der weiteren Wiedergabeeinheit kann es sich beispielsweise um ein zusätzliches Display oder einen zusätzlichen Lautsprecher im Innenraum des Fahrzeugs handeln. Die weitere Wiedergabeeinheit kann so angeordnet sein, dass sie auf den zumindest einen zweiten Benutzer ausgerichtet ist und für den zumindest einen ersten Benutzer nicht einsehbar ist. Mittels der weiteren Wiedergabeeinheit kann die vertrauliche Nachricht im Fahrzeug in Anwesenheit des zumindest einen ersten Benutzers wiedergegeben werden, ohne dass der zumindest eine erste Benutzer von der vertraulichen Nachricht erfährt.

Gemäß einer weiteren Ausführungsform des vorliegenden Ansatzes kann die im Schritt des Einlesens eingelesene Benutzerinformation ein von einem optischen Sensor des Fahrzeugs ausgegebenes Signal repräsentieren. Bei einem optischen Sensor kann es sich beispielsweise um eine im Fahrzeuginnenraum installierte Kamera handeln, die ausgebildet ist, um ein Vorhandensein von Fahrzeuginsassen im Fahrzeug zu erfassen. Ferner kann der optische Sensor ausgebildet sein, um den zumindest einen ersten von dem zumindest einen dritten Benutzer zu unterscheiden. Dazu kann der optische Sensor beispielsweise mit einer Bilddatenbank mit Informationen bezüglich eines Aussehens des zumindest einen dritten Benutzers kombiniert sein. Mittels des optischen Sensors kann die Benutzerinformation mit hoher Zuverlässigkeit bereitgestellt werden.

Gemäß einer weiteren Ausführungsform des vorliegenden Ansatzes kann die im Schritt des Einlesens eingelesene Benutzerinformation ein von einem Sitzsensor des Fahrzeugs ausgegebenes Signal repräsentieren. Der Sitzsensor kann in zumindest einen Sitzplatz des Fahrzeugs eingebaut sein und ausgebildet sein, um ansprechend auf eine Belegung des zumindest einen Sitzplatzes das Signal auszugeben. Mittels des Sitzsensors kann mit hoher Zuverlässigkeit festgestellt werden, ob sich weitere Personen neben dem zumindest einen zweiten Benutzer im Fahrzeug befinden.

Gemäß einer weiteren Ausführungsform des vorliegenden Ansatzes kann die im Schritt des Einlesens eingelesene Benutzerinformation ein von einer Stimmenerkennungseinheit des Fahrzeugs ausgegebenes Signal repräsentieren. Die Stimmenerkennungseinheit kann beispielsweise ein Mikrofon zum Einlesen eines Stimmensignals aufweisen. Das Stimmensignal kann eine Stimme des zumindest einen dritten Benutzers repräsentieren. Um den zumindest einen dritten Benutzer zu identifizieren, kann die Stimmenerkennungseinheit beispielsweise mit einer Stimmendatenbank mit Stimmaufnahmen des zumindest einen dritten Benutzers kombiniert sein. Mittels der Stimmenerkennungseinheit kann die Benutzerinformation mit hoher Zuverlässigkeit bereitgestellt werden.

Der vorliegende Ansatz schafft ferner eine Vorrichtung zum Steuern einer Wiedergabeeinheit eines Fahrzeugs, wobei die Wiedergabeeinheit ausgebildet ist, um zumindest einem ersten Benutzer der Wiedergabeeinheit eine Nachricht wiederzugeben, wobei die Vorrichtung folgende Merkmale aufweist:
eine Einleseeinheit zum Einlesen einer Benutzerinformation bezüglich eines Vorhandenseins des zumindest einen ersten Benutzers in dem Fahrzeug;
eine Empfangseinheit zum Empfangen einer vertraulichen Nachricht über eine Schnittstelle zu einem zumindest einem zweiten Benutzer zugeordneten Informationsgerät, wobei die vertrauliche Nachricht eine nicht zur Wiedergabe für den zumindest einen ersten Benutzer vorgesehene Nachricht repräsentiert; und
eine Verarbeitungseinheit zum Verarbeiten der vertraulichen Nachricht, wobei die Verarbeitungseinheit ausgebildet ist, um eine Wiedergabe der vertraulichen Nachricht auf der Wiedergabeeinheit zu unterdrücken, wenn die vertrauliche Nachricht empfangen wird und die eingelesene Benutzerinformation das Vorhandensein des zumindest einen ersten Benutzers repräsentiert.

Unter einer Vorrichtung kann vorliegend ein elektrisches Gerät verstanden werden, das Sensorsignale verarbeitet und in Abhängigkeit davon Steuer-und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Bei einer Einlese-, Empfangs- und Verarbeitungseinheit kann es sich jeweils um ein elektrisches Steuergerät handeln, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Durch die Vorrichtung kann die dem hier vorgestellten Ansatz zugrunde liegende Aufgabe schnell und effizient gelöst werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine schematische Darstellung eines Fahrzeugs mit einer Vorrichtung zum Steuern einer Wiedergabeeinheit des Fahrzeugs gemäß einem Ausführungsbeispiel der vorliegenden Erfindung;
- Fig. 2: ein Ablaufdiagramm eines Verfahrens zum Steuern einer Wiedergabeeinheit eines Fahrzeugs gemäß einem weiteren Ausführungsbeispiel der vorliegenden Erfindung; und
- Fig. 3: ein Ablaufdiagramm eines Verfahrens zum Steuern einer Wiedergabeeinheit eines Fahrzeugs gemäß einem weiteren Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

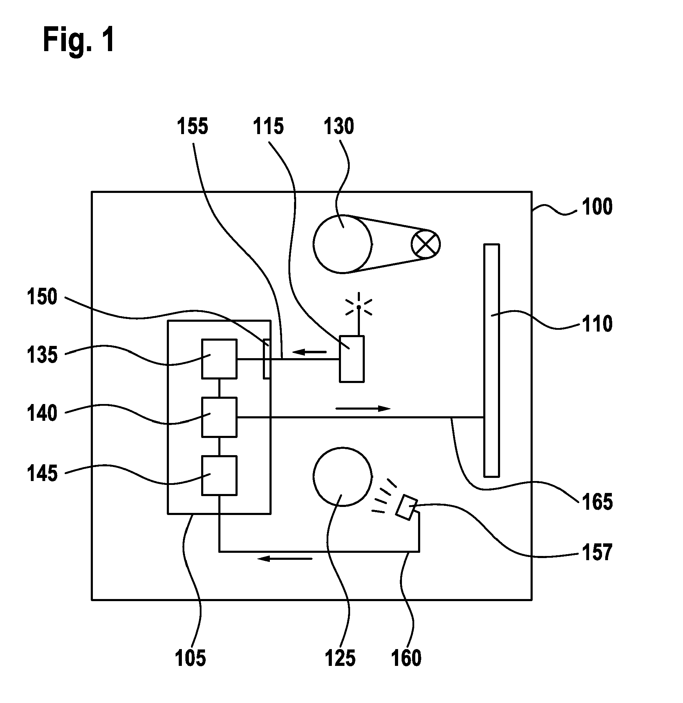

Fig. 1 zeigt eine schematische Darstellung eines Fahrzeugs 100 mit einer Vorrichtung 105 zum Steuern einer Wiedergabeeinheit 110 des Fahrzeugs 100 gemäß einem Ausführungsbeispiel der vorliegenden Erfindung. Das Fahrzeug 100 weist die Vorrichtung 105, die Wiedergabeeinheit 110 und ein Informationsgerät 115 auf. Ferner befindet sich in dem Fahrzeug 100 zumindest ein erster Benutzer 125 und zumindest ein zweite Benutzer 130 der Wiedergabeeinheit 110. Bei dem zumindest einen zweiten Benutzer 130 kann es sich um einen Fahrer des Fahrzeugs 100 oder einen Besitzer des Informationsgeräts 115 handeln. Bei dem zumindest einen ersten Benutzer 125 des Fahrzeugs 100 kann es sich um einen Beifahrer des Fahrers als zumindest einen zweiten Benutzers 130 handeln. Die Wiedergabeeinheit 110 ist in einem vorderen Bereich des Fahrzeugs 100 zwischen den beiden Benutzern 125, 130 so angeordnet, dass sie für die beiden Benutzer 125, 130 (zumindest aber den ersten Benutzer 125) gleichermaßen einsehbar ist. Bei der Wiedergabeeinheit 110 kann es sich beispielsweise um ein in eine Mittelkonsole des Fahrzeugs 100 integriertes Display zum Anzeigen einer Nachricht handeln. Ferner ist zwischen den beiden Benutzern 125, 130 das Informationsgerät 115 angeordnet. Das Informationsgerät 115 ist schematisch mit einer Funkantenne zum Empfangen der Nachricht über eine Internet- oder Telefonverbindung dargestellt. Bei dem Informationsgerät 115 kann es sich beispielsweise um ein Mobiltelefon oder einen Tablet-PC handeln. Ferner kann das Informationsgerät 115 auch als integraler Bestandteil einer Head-Unit ("Haupteinheit") des Fahrzeugs 100 ausgeführt sein.

Die Vorrichtung 105 weist eine Empfangseinheit 135, eine Verarbeitungseinheit 140 sowie eine Einleseeinheit 145 auf. Die Empfangseinheit 135 ist über eine Schnittstelle 150, beispielsweise eine Bluetooth-, Wifi- oder Kabelverbindung, mit dem Informationsgerät 115 verbunden. Das Informationsgerät 115 ist ausgebildet, um eine Nachricht, beispielsweise in Form einer SMS, einer E-Mail, einer Erinnerungsmeldung oder eines Telefonanrufs, über die Internet- oder Telefonverbindung zu empfangen. Bei der Nachricht kann sich um eine vertrauliche Nachricht 155 handeln, wobei die vertrauliche Nachricht 155 im Gegensatz zu einer öffentlichen Nachricht nicht zur Wiedergabe für den zumindest einen ersten Benutzer 125 vorgesehen ist. Das Informationsgerät 115 kann die vertrauliche Nachricht 155 in Form eines entsprechenden Nachrichtensignals an die Schnittstelle 150 ausgeben. Die Empfangseinheit 135 kann die von dem Informationsgerät 115 ausgegebene vertrauliche Nachricht 155 über die Schnittstelle 150 empfangen.

Gemäß diesem Ausführungsbeispiel kann die Vorrichtung 105 eine optionale Schnittstelle zu einem optischen Sensor 157 aufweisen. Bei dem optischen Sensor 157 kann es sich beispielsweise um eine in einem Fahrzeuginnenraum angebrachte Kamera zum Erfassen des zumindest einen ersten Benutzers 125 handeln. Der optische Sensor 157 kann so in dem Fahrzeug 100 angeordnet sein, dass er auf einen Sitzplatz des zumindest einen ersten Benutzers 125 gerichtet ist. Der optische Sensor 157 kann ausgebildet sein, um eine Benutzerinformation 160 bezüglich eines Vorhandenseins des zumindest einen ersten Benutzers 125 in dem Fahrzeug 100 in Form eines entsprechenden Benutzersignals auszugeben. Die Einleseeinheit 145 kann über die optionale Schnittstelle mit dem optischen Sensor 157 verbunden sein. Ferner kann die Einleseeinheit 145 die von dem optischen Sensor 157 ausgegebene Benutzerinformation 160 über die optionale Schnittstelle empfangen.

Die Verarbeitungseinheit 140 ist mit der Wiedergabeeinheit 110 verbunden. Ferner ist die Verarbeitungseinheit 140 je mit der Empfangseinheit 135 und der Einleseeinheit 145 verbunden. Die Empfangseinheit 135 kann die vertrauliche Nachricht 155 ausgeben. Die Einleseeinheit 145 kann die Benutzerinformation 160 ausgeben. Die Verarbeitungseinheit 140 kann je die vertrauliche Nachricht 155 und die Benutzerinformation 160 empfangen. Die Verarbeitungseinheit 140 kann ansprechend auf den Empfang der vertraulichen Nachricht 155 ein Wiedergabesignal 165 zum Wiedergeben der Nachricht auf der Wiedergabeeinheit 110 bereitstellen. Die Wiedergabeeinheit 110 kann das von der Verarbeitungseinheit 150 bereitgestellte Wiedergabesignal 165 empfangen. Die Verarbeitungseinheit 140 ist ausgebildet, um das Bereitstellen des Wiedergabesignals 165 zu unterdrücken, wenn es sich bei der empfangenen Nachricht um die vertrauliche Nachricht 155 handelt und die Benutzerinformation 160 das Vorhandensein des zumindest einen ersten Benutzers 125 repräsentiert. Gemäß einem weiteren Ausführungsbeispiel der vorliegenden Erfindung kann die Verarbeitungseinheit 140 ausgebildet sein, um das Wiedergabesignal 165 bereitzustellen, wenn es sich bei der empfangenen Nachricht um die öffentliche Nachricht handelt und die Benutzerinformation 160 das Vorhandensein des zumindest einen ersten Benutzers 125 repräsentiert.

Zudem kann die Verarbeitungseinheit 140 gemäß einem weiteren Ausführungsbeispiel der vorliegenden Erfindung ausgebildet sein, um das Wiedergabesignal 165 bereitzustellen, wenn es sich bei der empfangenen Nachricht um die vertrauliche Nachricht 155 handelt und die Benutzerinformation 160 ein Nichtvorhandensein des zumindest einen ersten Benutzers 125 repräsentiert.

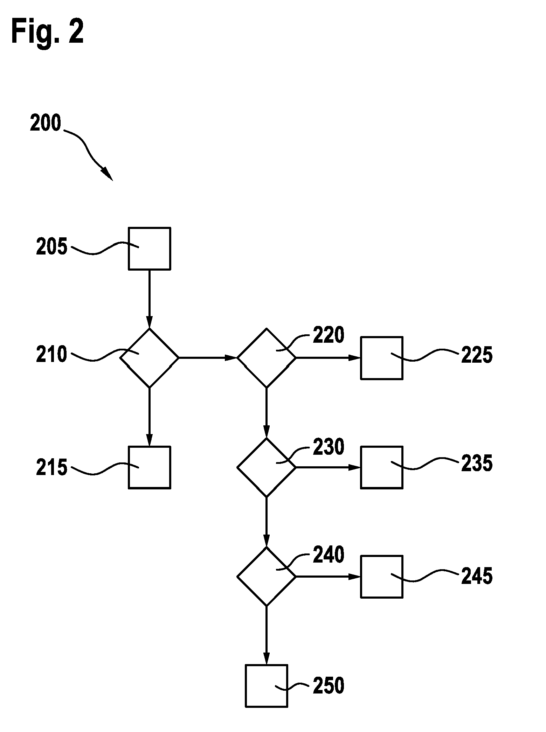

Fig. 2 zeigt ein Ablaufdiagramm eines Verfahrens 200 zum Steuern einer Wiedergabeeinheit eines Fahrzeugs gemäß einem weiteren Ausführungsbeispiel der vorliegenden Erfindung. Das Verfahren 200 kann beispielsweise mittels der in Fig. 1 gezeigten Vorrichtung 105 durchgeführt werden. Zunächst wird in einem Schritt 205 eine Nachricht empfangen. Ansprechend auf den Schritt 205 wird in einem Schritt 210 geprüft, ob es sich bei der empfangenen Nachricht um eine vertrauliche oder eine öffentliche Nachricht handelt. Ergibt sich im Schritt 210, dass es sich um die öffentliche Nachricht handelt, so erfolgt in einem Schritt 215 die Wiedergabe der öffentlichen Nachricht über die Wiedergabeeinheit des Fahrzeugs. Ergibt sich hingegen im Schritt 210, dass es sich bei der empfangenen Nachricht um die vertrauliche Nachricht handelt, so wird in einem Schritt 220 überprüft, wie viele Benutzer der Wiedergabeeinheit in dem Fahrzeug vorhanden sind. Wenn sich im Schritt 220 ergibt, dass beispielsweise ein Fahrer als zumindest ein zweiter Benutzer allein im Fahrzeug vorhanden ist, wird die vertrauliche Nachricht in einem Schritt 225 auf der Wiedergabeeinheit wiedergegeben. Wenn sich im Schritt 220 ergibt, dass neben dem zumindest einen zweiten Benutzer zumindest ein weiterer Benutzer im Fahrzeug vorhanden ist, wird in einem Schritt 230 festgestellt, ob es sich bei dem zumindest einen weiteren Benutzer um zumindest einen ersten oder zumindest einen dritten Benutzer handelt. Ergibt sich im Schritt 230, dass es sich bei dem zumindest einen weiteren Benutzer um den zumindest einen dritten Benutzer handelt, so wird die vertrauliche Nachricht in einem Schritt 235 ebenfalls auf der Wiedergabeeinheit wiedergegeben. Ergibt sich hingegen im Schritt 230, dass es sich bei dem zumindest einen weiteren Benutzer um den zumindest einen ersten Benutzer handelt, so wird in einem Schritt 240 geprüft, ob das Fahrzeug eine weitere Wiedergabeeinheit zum Wiedergeben der vertraulichen Nachricht aufweist. Ergibt sich im Schritt 240, dass das Fahrzeug die weitere Wiedergabeeinheit aufweist, so erfolgt in einem Schritt 245 die Wiedergabe der vertraulichen Nachricht auf der weiteren Wiedergabeeinheit. Wenn sich im Schritt 245 ergibt, dass das Fahrzeug keine weitere Wiedergabeeinheit aufweist, so wird die Wiedergabe der vertraulichen Nachricht auf der Wiedergabeeinheit des Fahrzeugs in einem Schritt 250 unterbunden.

Im Folgenden wird anhand der Figuren 1 und 2 ein weiteres Ausführungsbeispiel der vorliegenden Erfindung beschrieben.

Mittels der in Fig. 1 gezeigten Vorrichtung 105 kann ein Smartphone-Pop-up-Verhalten in einem Fahrzeugkontext personalisiert werden. Dazu kann ein Nutzer des Smartphones, auch Informationsgerät 115 genannt, individuell konfigurieren, welche Nachrichtentypen in welchem Konfigurationsmodus der Vorrichtung 105 auf der Wiedergabeeinheit 110 angezeigt werden. Bei dem Nutzer kann es sich beispielsweise um einen Fahrer des Fahrzeugs 100 handeln. Der Nutzer, der auch als zumindest ein zweiter Benutzer 130 bezeichnet werden kann, kann ferner konfigurieren, welche Anzeige- oder Benachrichtigungssysteme für ihn vertraulich sind und welche Beifahrergruppen Zugang zu vorher definierten Informationen haben dürfen.

Ein intelligentes System, beispielsweise in Form der Vorrichtung 105, kann über Fahrzeugsensoren wie etwa eine Kamera als optischen Sensor 157 oder eine Sitzerkennung erkennen, ob der Fahrer des Fahrzeugs 100 allein im Fahrzeug 100 ist. Dies entspricht einem ersten Modus der Vorrichtung 105. Ist der erste Modus aktiv, so werden dem Nutzer, insbesondere dem Fahrer, vorher definierte Informationen auf der Wiedergabeeinheit 110 dargestellt. Bei der Wiedergabeeinheit 110 kann es sich beispielsweise um ein Center-Stack-Display einer Head-Unit, einen Instrumentencluster oder ein Multimediasystem des Fahrzeugs 100 handeln.

Neben dem Nutzer können sich noch weitere Mitfahrer oder Mitfahrergruppen im Fahrzeug 100 befinden. Dies entspricht einem zweiten Modus der Vorrichtung 105. Ist der zweite Modus aktiv, so können dem Nutzer oder den Nutzern, etwa dem Fahrer und zumindest einem Beifahrer, nur ausgewählte bzw. vorher definierte Informationen im Fahrzeug 100 angezeigt werden.

Optional können die Mitfahrer oder die Mitfahrergruppen gemäß einem weiteren Ausführungsbeispiel der vorliegenden Erfindung klassifiziert werden, um eine detaillierte Unterteilung vorzunehmen. Beispielsweise kann die Vorrichtung 105 ausgebildet sein, um die Mitfahrer einer Familie des Fahrers als dem zumindest einen dritten Benutzer zuzuordnen. Hierbei kann die Mitfahrergruppe beispielsweise über eine Innenraumkamera als optischen Sensor 157 und einen Abgleich mit einer Datenbank identifiziert werden.

Gemäß einem weiteren Ausführungsbeispiel der vorliegenden Erfindung kann die Vorrichtung 105 ausgebildet sein, um im zweiten Modus einzelne Nachrichtentypen an ausgewählte Displays, auch weitere Wiedergabeeinheiten genannt, zu senden. Dabei können die ausgewählten Displays nur für den Nutzer bzw. Fahrer einsehbar sein. Solche Displays können beispielsweise in Form eines Head-up-Displays oder einer Datenbrille realisiert sein. Außerdem kann gemäß diesem Ausführungsbeispiel das System auch schon nur mit dem Gespann aus Mobiltelefon und Datenbrille funktionieren. Das Mobiltelefondisplay ist in diesem Fall das Display, das durchaus mehrere Nutzer einsehen können.

Ferner kann der Nutzer das Smartphone bzw. ein die Nachrichten empfangendes System hinsichtlich einzelner Applikationen oder Nachrichtengruppen konfigurieren, etwa um die Nachrichten als öffentlich oder vertraulich zu markieren. Die Nachrichten können beispielsweise in Form von Pop-ups auf den Displays angezeigt werden. Der Nutzer kann eine Auswahl darüber treffen, welche Informationen oder Pop-ups, zum Beispiel nach Applikationen sortiert, in welchen Fällen auf welchen Displays angezeigt werden.

Für jeden Nachrichten- oder Applikationstyp können beispielsweise folgende Optionen festgelegt werden. Alternativ oder zusätzlich können die Optionen miteinander kombiniert werden.

Eine erste Option kann bewirken, dass das Pop-up ein empfangendes Gerät wie etwa das Smartphone nicht verlässt. Eine zweite Option kann bewirken, dass das Pop-up an ein angeschlossenes Gerät oder Display je nach Konfiguration weitergeleitet wird. Eine dritte Option kann bewirken, dass das Pop-up nur weitergeleitet wird, wenn sich der Fahrer des Fahrzeugs 100 allein im Fahrzeug 100 befindet. Eine vierte Option kann bewirken, dass das Pop-up nur weitergeleitet wird, wenn sich eine bestimmte Mitfahrergruppe im Fahrzeug 100 befindet, wobei die Mitfahrergruppe wie beschrieben konfigurierbar sein kann. Eine fünfte Option kann bewirken, dass das Pop-up an ein ausgewähltes Gerät oder Display weitergeleitet wird, wenn sich der Fahrer nicht allein im Fahrzeug 100 befindet. Die fünfte Option kann beispielsweise mit der zweiten und/oder vierten Option kombiniert werden.

Ein Verfahren zum Personalisieren eines Smartphone-Pop-up-Verhaltens in einem Fahrzeugkontext kann folgende Schritte umfassen. In einem Schritt 205 geht eine neue Nachricht auf einem empfangenden System ein. Hierbei kann es sich beispielsweise um das Smartphone, aber auch um ein Head-Unit-basiertes oder kombiniertes System handeln. In einem weiteren Schritt 210 prüft das System, welche Einstellungen für die neue Nachricht definiert sind bzw. um welchen Nachrichtentyp es sich bei der neuen Nachricht handelt. Ergibt sich im Schritt 210, dass die erste Option aktiv ist, d. h., dass eine Weiterleitung der Nachricht vom Smartphone zur Wiedergabeeinheit erfolgen soll, so wird in einem weiteren Schritt 220 geprüft, welche Gruppenbeschränkung vorliegt. Ergibt sich hingegen im Schritt 210, dass die zweite Option aktiv ist, d. h., dass keine Weiterleitung erfolgen soll, so wird in einem Schritt 215 die Weiterleitung der Nachricht unterdrückt. Ergibt sich im Schritt 220, dass die dritte Option aktiv ist, d. h., dass die Nachricht nur dem Fahrer gezeigt werden darf, so prüft das System in einem zusätzlichen Schritt 230, ob sich der Fahrer allein im Fahrzeug befindet. Dies entspricht dem weiter oben beschriebenen ersten Modus. Zu dieser Überprüfung können beispielsweise Daten von Sitzsensoren oder Kamerasystemen genutzt werden. Ergibt sich hingegen im Schritt 230, dass die vierte Option aktiv ist, d. h., dass die Nachricht nur einer bestimmten Mitfahrergruppe gezeigt werden darf, so prüft das System in einem zusätzlichen Schritt 240, ob sich nur Personen dieser Gruppe im Fahrzeug befinden. Dies entspricht dem weiter oben beschriebenen zweiten Modus. Hierzu können der Mitfahrergruppe beispielsweise Daten über eine Familienzugehörigkeit, etwa aus einem Telefonbuch des Smartphones, zugeordnet werden und entsprechende Fotos der Personen mit dem Kamerasystem zur Personenerkennung abgeglichen werden. Zusätzlich oder alternativ können auch andere Erkennungsverfahren wie etwa ein Stimmenerkennungsverfahren mittels einer Stimmenerkennungseinheit des Fahrzeugs eingesetzt werden. In einem anschließenden Schritt wird überprüft, ob die fünfte Option aktiv ist, d. h., ob die Nachricht an ausgewählte Ausgabegeräte weitergeleitet werden soll, wenn der Fahrer nicht allein im Fahrzeug ist. In Abhängigkeit von den in den vorangegangenen Schritten durchgeführten Überprüfungen wird eine Auswahl der erlaubten Ausgabegeräte definiert. Schließlich wird die Nachricht in einem nächsten Schritt zur Wiedergabe an die ausgewählten Ausgabegeräte weitergeleitet bzw. eine Wiedergabe der Nachricht verhindert, wenn kein Ausgabegerät ausgewählt wurde, beispielsweise weil keine weitere Wiedergabeeinheit vorhanden ist oder der Fahrer nicht allein im Fahrzeug ist bzw. der Beifahrer nicht als eine der Nutzergruppe des Smartphones zugehörige Person identifiziert wurde.

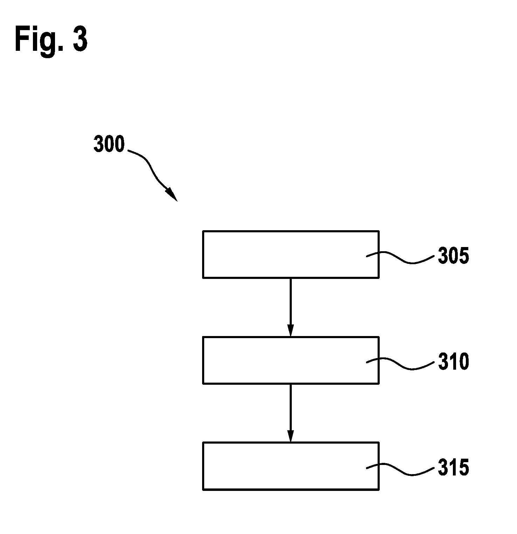

Fig. 3 zeigt ein Ablaufdiagramm eines Verfahrens 300 zum Steuern einer Wiedergabeeinheit eines Fahrzeugs gemäß einem weiteren Ausführungsbeispiel der vorliegenden Erfindung. Hierbei ist die Wiedergabeeinheit ausgebildet, um zumindest einem ersten Benutzer der Wiedergabeeinheit eine Nachricht wiederzugeben. In einem Schritt 305 erfolgt zunächst das Einlesen einer Benutzerinformation bezüglich eines Vorhandenseins des zumindest einen ersten Benutzers in dem Fahrzeug. Anschließend wird in einem Schritt 310 eine vertrauliche Nachricht über eine Schnittstelle zu einem zumindest einem zweiten Benutzer zugeordneten Informationsgerät empfangen. Dabei repräsentiert die vertrauliche Nachricht eine nicht zur Wiedergabe für den zumindest einen ersten Benutzer vorgesehene Nachricht. In einem weiteren Schritt 315 erfolgt schließlich das Verarbeiten der vertraulichen Nachricht, um eine Wiedergabe der vertraulichen Nachricht auf der Wiedergabeeinheit zu unterdrücken, wenn im Schritt des Empfangens die vertrauliche Nachricht empfangen wird und die im Schritt des Einlesens eingelesene Benutzerinformation das Vorhandensein des zumindest einen ersten Benutzers repräsentiert.

Ein zusätzlicher Aspekt des hier vorgestellten Ansatzes kann dadurch realisiert sein, dass wenn Nachrichten privat gehalten werden sollen (also z. B. nur für den Fahrer einsehbar sein sollen), diese auch auf Displays des Empfangsgerätes (z. B. Mobiltelefon) zu unterdrücken ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Steuern einer Wiedergabeeinheit (110) eines Fahrzeugs (100), wobei die Wiedergabeeinheit (110) ausgebildet ist, um zumindest einem ersten Benutzer (125) der Wiedergabeeinheit (110) eine Nachricht wiederzugeben, wobei das Verfahren (300) folgende Schritte umfasst:
Einlesen (305) einer Benutzerinformation (160) bezüglich eines Vorhandenseins des zumindest einen ersten Benutzers (125) in dem Fahrzeug (100);
Empfangen (310) einer vertraulichen Nachricht (155) über eine Schnittstelle (150) zu einem zumindest einem zweiten Benutzer (130) zugeordneten Informationsgerät (115), wobei die vertrauliche Nachricht (155) eine nicht zur Wiedergabe für den zumindest einen ersten Benutzer (125) vorgesehene Nachricht repräsentiert; und
Verarbeiten (315) der vertraulichen Nachricht (155), um eine Wiedergabe der vertraulichen Nachricht (155) auf der Wiedergabeeinheit (110) zu unterdrücken, wenn im Schritt des Empfangens (310) die vertrauliche Nachricht (155) empfangen wird und die im Schritt des Einlesens (305) eingelesene Benutzerinformation (160) das Vorhandensein des zumindest einen ersten Benutzers (125) repräsentiert.

2. Verfahren (300) gemäß Anspruch 1, **dadurch gekennzeichnet, dass** im Schritt des Empfangens (310) eine öffentliche Nachricht empfangen wird, wobei die öffentliche Nachricht eine zur Wiedergabe für den zumindest einen ersten Benutzer (125) vorgesehene Nachricht repräsentiert, wobei ferner in einem Schritt des Wiedergebens die öffentliche Nachricht auf der Wiedergabeeinheit (110) wiedergegeben wird, wenn im Schritt des Empfangens (310) die öffentliche Nachricht empfangen wird.

3. Verfahren (300) gemäß einem der vorangegangenen Ansprüche, **dadurch gekennzeichnet, dass** im Schritt des Verarbeitens (315) die vertrauliche Nachricht (155) verarbeitet wird, um die vertrauliche Nachricht (155) auf der Wiedergabeeinheit (110) wiederzugeben, wenn im Schritt des Empfangens (310) die vertrauliche Nachricht (155) empfangen wird und die im Schritt des Einlesens (305) eingelesene Benutzerinformation (160) ein Nichtvorhandensein des zumindest einen ersten Benutzers (125) repräsentiert.

4. Verfahren (300) gemäß einem der vorangegangenen Ansprüche, **dadurch gekennzeichnet, dass** im Schritt des Einlesens (305) ferner eine Benutzerinformation (160) bezüglich eines Vorhandenseins zumindest eines dritten Benutzers eingelesen wird, wobei im Schritt des Verarbeitens (315) die vertrauliche Nachricht (155) verarbeitet wird, um die vertrauliche Nachricht (155) auf der Wiedergabeeinheit (110) wiederzugeben, wenn im Schritt des Empfangens (310) die vertrauliche Nachricht (155) empfangen wird und die im Schritt des Einlesens (305) eingelesene Benutzerinformation (160) das Vorhandensein des zumindest einen dritten Benutzers repräsentiert.

5. Verfahren (300) gemäß einem der vorangegangenen Ansprüche, **gekennzeichnet durch** einen Schritt des Ausgebens der vertraulichen Nachricht (155) auf zumindest einer weiteren Wiedergabeeinheit des Fahrzeugs (100), wenn im Schritt des Empfangens (310) die vertrauliche Nachricht (155) empfangen wird und die im Schritt des Einlesens (305) eingelesene Benutzerinformation (160) das Vorhandensein des zumindest einen ersten Benutzers (125) repräsentiert, wobei die zumindest eine weitere Wiedergabeeinheit ausgebildet ist, um dem zumindest einen zweiten Benutzer (130) die vertrauliche Nachricht (155) und/oder die öffentliche Nachricht wiederzugeben.

6. Verfahren (300) gemäß einem der vorangegangenen Ansprüche, **dadurch gekennzeichnet, dass** die im Schritt des Einlesens (305) eingelesene Benutzerinformation (160) ein von einem optischen Sensor (157) des Fahrzeugs (100) ausgegebenes Signal repräsentiert.

7. Verfahren (300) gemäß einem der vorangegangenen Ansprüche, **dadurch gekennzeichnet, dass** die im Schritt des Einlesens (305) eingelesene Benutzerinformation (160) ein von einem Sitzsensor des Fahrzeugs (100) ausgegebenes Signal repräsentiert.

8. Verfahren (300) gemäß einem der vorangegangenen Ansprüche, **dadurch gekennzeichnet, dass** die im Schritt des Einlesens (305) eingelesene Benutzerinformation (160) ein von einer Stimmenerkennungseinheit des Fahrzeugs (100) ausgegebenes Signal repräsentiert.

9. Vorrichtung (105) zum Steuern einer Wiedergabeeinheit (110) eines Fahrzeugs (100), wobei die Wiedergabeeinheit (110) ausgebildet ist, um zumindest einem ersten Benutzer (125) der Wiedergabeeinheit (110) eine Nachricht wiederzugeben, wobei die Vorrichtung (105) folgende Merkmale aufweist:
eine Einleseeinheit (145) zum Einlesen einer Benutzerinformation (160) bezüglich eines Vorhandenseins des zumindest einen ersten Benutzers (125) in dem Fahrzeug (100);
eine Empfangseinheit (135) zum Empfangen einer vertraulichen Nachricht (155) über eine Schnittstelle (150) zu einem zumindest einem zweiten Benutzer (130) zugeordneten Informationsgerät (115), wobei die vertrauliche Nachricht (155) eine nicht zur Wiedergabe für den zumindest einen ersten Benutzer (125) vorgesehene Nachricht repräsentiert; und
eine Verarbeitungseinheit (140) zum Verarbeiten der vertraulichen Nachricht (155), wobei die Verarbeitungseinheit (140) ausgebildet ist, um eine Wiedergabe der vertraulichen Nachricht (155) auf der Wiedergabeeinheit (110) zu unterdrücken, wenn die vertrauliche Nachricht (155) empfangen wird und die eingelesene Benutzerinformation (160) das Vorhandensein des zumindest einen ersten Benutzers (125) repräsentiert.

10. Computerprogrammprodukt mit Programmcode zur Durchführung des Verfahrens (300) nach einem der Ansprüche 1 bis 8, wenn das Programmprodukt auf einer Vorrichtung (105) ausgeführt wird.
